# EUROPEAN PATENT APPLICATION

(11) **EP 4 560 580 A1**
(43) Date of publication of application: **28.05.2025**
(21) Application number: 23859429.5
(22) Date of filing: 30.08.2023
(51) Int. Cl.: G06T 17/00

(54) **TOOTH MODEL GENERATION METHOD AND APPARATUS, AND ELECTRONIC DEVICE AND STORAGE MEDIUM**

(30) Priority: 30.08.2022 CN 202211045812
(71) Applicant: Shining 3D Tech Co., Ltd., Hangzhou, Zhejiang 311258 (CN)
(72) Inventor: WANG, Jialei, Hangzhou, Zhejiang 311258 (CN); QIU, Kaijia, Hangzhou, Zhejiang 311258 (CN); LAI, Kainan, Hangzhou, Zhejiang 311258 (CN); ZHANG, Jian, Hangzhou, Zhejiang 311258 (CN); JIANG, Tengfei, Hangzhou, Zhejiang 311258 (CN)
(74) Representative: Ponti & Partners, S.L.P
(86) International application number: PCT/CN2023/115960
(87) International publication number: WO 2024/046400

(57) **Abstract**

The disclosure relates to a tooth model generation method and apparatus, and an electronic device and a storage medium. The tooth model generation method comprises: performing instance segmentation on acquired CBCT data of a target dental jaw, so as to determine voxel data of individual teeth forming the target dental jaw; performing reconstruction according to the voxel data of the individual teeth in the target dental jaw, so as to obtain reconstructed three-dimensional data; registering the reconstructed three-dimensional data and scanned three-dimensional data which is acquired by means of an intraoral scanner scanning the target dental jaw; and performing fusion on the basis of the registered reconstructed three-dimensional data and the registered scanned three-dimensional data, so as to generate a tooth model. By means of the method provided in the present application, automatic fusion of CBCT data and three-dimensional data obtained by means of an intraoral scanner performing scanning can be realized, a generated complete and high-precision tooth model can meet clinical requirements to the greatest extent possible, and the fusion efficiency is also relatively high.

## Description

The present application claims the priority to the Chinese patent application with the filling No. 202211045812.9 filed with the Chinese Patent Office on August 30, 2022, and entitled "TOOTH MODEL GENERATION METHOD AND APPARATUS, AND ELECTRONIC DEVICE AND STORAGE MEDIUM", the contents of which are incorporated herein by reference in entirety.

### TECHNICAL FIELD

The present application relates to the technology field of computers, and particularly, to a tooth model generation method and an apparatus, and an electronic device and a storage medium.

### BACKGROUND ART

In the field of oral medicine, the display of single data can no longer meet clinical needs. In professional dental fields such as implantation and orthodontics, it is often necessary to obtain complete geometric information of individual teeth in order to reconstruct an entire single tooth, so as to guide subsequent implantation and orthodontic procedures.

Currently, three-dimensional mesh data (triangular surface patches) of the upper and lower jaws inside the oral cavity of the patient can be obtained by scanning the oral cavity of the patient using an intraoral scanner or by scanning the impression bitten by the patient using a dental desktop scanner. This process enables the acquisition of high-precision tooth crown data but may lead to the loss of adjacent surface information and failure to acquire tooth root data, making it easy to overlook data of teeth such as unexposed wisdom teeth. By using CBCT (cone beam computed tomography), complete three-dimensional information of teeth and jawbones can be obtained. However, due to the limited image resolution and the presence of various metal artifacts, the collected CBCT data alone cannot depict precise details of the tooth surface, resulting in relatively low accuracy in depicting precise details of the tooth surface.

Moreover, the current methods mainly include manually segmenting the tooth region from CBCT data and manually registering CBCT data with intraoral scanning mesh data. The entire process is time-consuming, requires human interaction, and cannot achieve full automation.

Therefore, in order to obtain a complete and high-accuracy tooth model that meets clinical needs, further solutions are urgently needed.

### SUMMARY

### (I) Technical problem to be solved

The technical problem to be solved by the present application is to address the issues of the existing tooth model generation process being time-consuming and having relatively low accuracy.

### (II) Technical solution

In order to solve the above technical problems, the embodiments of the present application provide a tooth model generation method, including:
performing instance segmentation on acquired CBCT data of a target dental jaw, so as to determine voxel data of individual teeth forming the target dental jaw;
performing reconstruction according to the voxel data of the individual teeth in the target dental jaw, so as to obtain reconstructed three-dimensional data;
registering the reconstructed three-dimensional data and scanned three-dimensional data which is acquired by means of an intraoral scanner scanning the target dental jaw; and
merging on the basis of the registered reconstructed three-dimensional data and the registered scanned three-dimensional data, so as to generate a tooth model.

In a second aspect, the present application further provides a tooth model generation apparatus, wherein the apparatus includes:
a determination module, configured for performing instance segmentation on acquired CBCT data of a target dental jaw, so as to determine voxel data of individual teeth forming the target dental jaw;
a reconstruction module, configured for performing reconstruction according to the voxel data of the individual teeth in the target dental jaw, so as to obtain reconstructed three-dimensional data;
a registration module, configured for registering the reconstructed three-dimensional data and scanned three-dimensional data which is acquired by means of an intraoral scanner scanning the target dental jaw; and
a generation module, configured for merging on the basis of the registered reconstructed three-dimensional data and the registered scanned three-dimensional data, so as to generate a tooth model.

In a third aspect, the present application further provides an electronic device, including:
a memory;
a processor; and
a computer program, wherein
the computer program is stored in the memory and configured to be executed by the processor to implement the aforementioned tooth model generation method.

In a fourth aspect, the present application further provides a computer-readable storage medium, wherein the storage medium stores a computer program. When executed by the processor, the computer program implements the steps of the aforementioned tooth model generation method.

### (III) Beneficial effects

The above technical solution provided by the embodiments of the present application has the following advantages compared with the prior art.

The embodiments of the present application provide the tooth model generation method, including: performing instance segmentation on acquired CBCT data of a target dental jaw, so as to determine voxel data of individual teeth forming the target dental jaw; performing reconstruction according to the voxel data of the individual teeth in the target dental jaw, so as to obtain reconstructed three-dimensional data; registering the reconstructed three-dimensional data and scanned three-dimensional data which is acquired by means of an intraoral scanner scanning the target dental jaw; and merging on the basis of the registered reconstructed three-dimensional data and the registered scanned three-dimensional data, so as to generate a tooth model. By means of the method provided in the present application, an automatic merging of CBCT data and three-dimensional data obtained by means of an intraoral scanner performing scanning can be realized, and a generated complete and high-precision tooth model can meet clinical requirements to the greatest extent possible, and the merging efficiency is also relatively high.

It should be understood that the above general description and the following detailed description are merely exemplary and explanatory and do not limit the present application.

### BRIEF DESCRIPTION OF DRAWINGS

The drawings herein are incorporated into the specification and constitute a part of the specification, illustrating embodiments consistent with the present application and, together with the specification, serve to explain the principles of the present application.

To more clearly describe the technical solutions of the embodiments of the present application or the prior art, a brief introduction to the drawings used in the description of the embodiments or the prior art is provided below. It is apparent to those skilled in the art that other drawings can also be derived from these drawings without paying inventive effort.
FIG. 1 is a schematic flow diagram of a tooth model generation method provided by the embodiment of the present application;
FIG. 2 is a schematic diagram of tooth meshing provided by the embodiment of the present application;
FIG. 3 is a schematic diagram of a tooth model provided by the embodiment of the present application;
FIG. 4 is a schematic flow diagram of a tooth model generation method provided by the embodiment of the present application;
FIG. 5 is a schematic diagram of a roughly registered tooth model provided by the embodiment of the present application;
FIG. 6 is a schematic diagram of a finely registered tooth model provided by the embodiment of the present application;
FIG. 7 is a schematic structural diagram of a tooth model generation apparatus provided by the embodiment of the present application; and
FIG. 8 is a schematic structural diagram of an electronic device provided by the embodiment of the present application.

### DETAILED DESCRIPTION OF EMBODIMENTS

In order to make the objectives, technical solutions, and advantages of the embodiments of the present application clearer, the technical solutions in the embodiments of the present application will be clearly and completely described below. Obviously, the described embodiments are part of the embodiments of the present application, but not all of the embodiments. Based on the embodiments of the present application, all other embodiments obtained by those skilled in the art without paying inventive effort shall fall within the protection scope of the present application.

Currently, in the professional dental field, it is necessary to obtain complete geometric information of individual teeth for modeling, which facilitates tracking the orthodontic process and guiding surgeries. The three-dimensional data output by digital intraoral scanners has high precision but loses information on interproximal surfaces and cannot acquire tooth root information. Moreover, the CBCT data is limited by image resolution, resulting in relatively coarse geometric information of teeth. In addition, when processing the CBCT data, usually, the tooth information is segmented manually from the CBCT data, and the CBCT data and the intraoral scanning mesh data are registered manually. The entire processing flow is time-consuming and requires human interaction. The generated tooth model is also of low accuracy and cannot be automated.

To address the above technical problems, the embodiments of the present application provide a tooth model generation method. By automatically and appropriately merging CBCT data with the three-dimensional data output by the digital intraoral scanner, it is possible to provide detailed three-dimensional gingival surfaces and corresponding geometric structures, including teeth crowns, teeth necks, and teeth roots. The generated tooth model has relatively high precision, and the entire process is automated, requiring no human interaction or intervention. This also reduces time consumption and the waste of manpower and resources. The tooth model can be effectively applied to occlusion analysis, implantation surgery, and other areas.

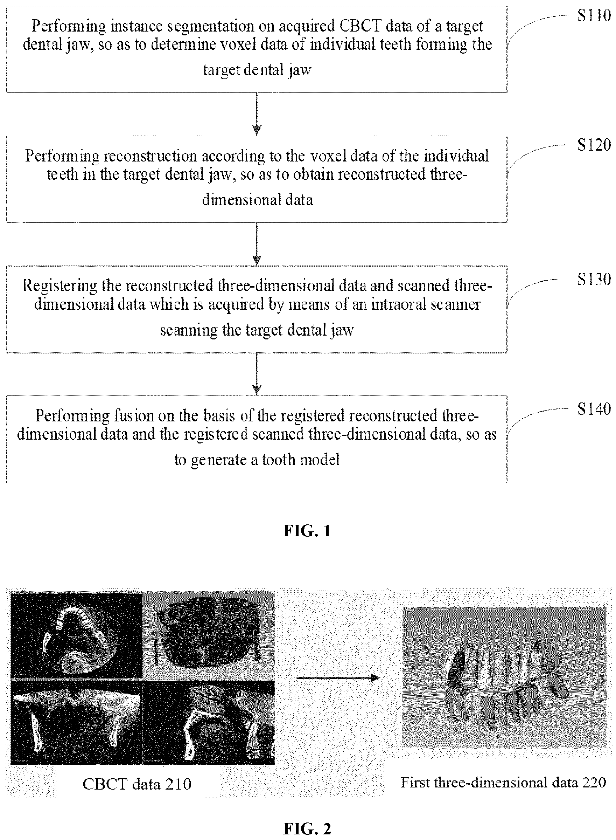

FIG. 1 is a schematic flow diagram of a tooth model generation method provided by the embodiment of the present application, which can be applied to a terminal and a server. Taking the execution of the tooth model generation method on a terminal as an example, the terminal performs registration and merging based on the acquired CBCT data and intraoral three-dimensional data to generate a high-precision, complete tooth model. The CBCT data and intraoral three-dimensional data can be sent by other terminals or preprocessed by other terminals before being sent. The manner in which the terminal acquires the data is not limited here, and the method by which the server generates the tooth model is not elaborated upon herein. Specifically, the tooth model generation method includes the following steps S110 to S140 as shown in FIG. 1.

S110: performing instance segmentation on acquired CBCT data of a target dental jaw, so as to determine voxel data of individual teeth forming the target dental jaw.

The CBCT data includes multiple CBCT images, and each image of the multiple CBCT images includes information about at least one tooth forming the target dental jaw.

It can be understood that CBCT data is generated by scanning the oral cavity of the object using CBCT. CBCT data consists of multiple CBCT images, and each image includes information about at least one tooth forming the target dental jaw. Each image may not include exactly the same dental information. The target dental jaw is the overall dental jaw within the oral cavity, and the target dental jaw can be further divided into the upper dental jaw and the lower dental jaw. The multiple CBCT images can be further categorized into upper dental jaw images and lower dental jaw images. The upper dental jaw images are composed of multiple CBCT images, and the lower dental jaw images are composed of the remaining multiple CBCT images. It can be understood that when performing instance segmentation on CBCT data, independent voxel data of individual teeth and overall voxel data of the target dental jaw, including the independent voxel data of individual teeth, can be obtained. Voxel data is three-dimensional data, and the multiple CBCT images obtained are two-dimensional data. The two-dimensional data of each target dental jaw can be performed by instance segmentation to obtain two-dimensional data of individual teeth, and the multi-image two-dimensional data of individual teeth is reconstructed into the corresponding voxel data.

Optionally, the voxel data of individual teeth can be segmented from the CBCT data through the following steps:
classifying the multiple CBCT images using a pre-trained deep learning model, determining the category of the individual teeth included in each CBCT image of the multiple CBCT images, and segmenting based on the category of the individual teeth to obtain the segmentation data of the individual teeth; and
obtaining the voxel data of the individual teeth forming the target dental jaw according to the segmentation data corresponding to the individual teeth of the same category in the multiple CBCT images.

It can be understood that a large number of CBCT images, where a large number of CBCT images can belong to dental jaws of multiple objects, are pre-acquired as training samples. The CBCT images are labeled, with each single tooth labeled as a category. For example, the teeth in the lower dental jaw of the oral cavity are labeled from number 17 to 32, and the teeth in the upper dental jaw are labeled from number 1 to 16. Based on the tooth number, it can be determined whether the tooth is in the upper dental jaw or lower dental jaw. Further, labels for the tooth jawbone can be added. The pre-constructed deep learning model is trained using the training samples. The deep learning model can be built based on the nnUNet framework, but specific methods for constructing the model are not limited, as long as it can perform individual teeth recognition and voxel data segmentation. The specific training method for the deep learning model is not restricted.

It can be understood that the pre-trained deep learning model classifies the multiple CBCT images, determines the category of the individual teeth included in each CBCT image of the multiple CBCT images, and specifically identifies the number of individual teeth. Each number corresponds to a category, and based on the number, it can be determined whether the tooth is in the upper dental jaw or the lower dental jaw, which facilitates the subsequent rough registration of the dental jaw as a whole. For example, tooth number 5 is automatically determined as belonging to the upper dental jaw; or the upper dental jaw or lower dental jaw can be identified first, followed by identifying and categorizing the number of the individual teeth within each dental jaw, that is, the dental jaws are categorized first and then the tooth numbers are determined. For each CBCT image, the category of the individual teeth is determined, and segmentation is performed according to the category of the individual teeth to obtain the segmentation data of the individual teeth. For instance, 13 individual teeth included in the first CBCT image are segmented according to their categories, thus obtaining 13 pieces of segmentation data. Finally, the segmentation data corresponding to the individual teeth of the same category in the multiple CBCT images are combined to obtain the voxel data of the individual teeth. In this process, the segmentation data corresponding to the individual teeth can be understood as two-dimensional data. According to the tooth category, the segmentation data of the same category are processed and combined into the voxel data of the individual teeth. The voxel data of the individual teeth is three-dimensional voxel data.

S120: performing reconstruction according to the voxel data of the individual teeth in the target dental jaw, so as to obtain reconstructed three-dimensional data.

Optionally, the reconstructed three-dimensional data include the three-dimensional data of the target dental jaw and first three-dimensional data of the individual teeth forming the target dental jaw.

It can be understood that, based on the voxel data of the individual teeth segmented from the CBCT data in the above S110, the first three-dimensional data of the individual teeth forming the target dental jaw and the three-dimensional data of the target dental jaw are reconstructed. The first three-dimensional data of the individual teeth and the three-dimensional data of the target dental jaw can be generated simultaneously or separately. The three-dimensional data of the target dental jaw and the first three-dimensional data can be point-cloud data or mesh data. The following embodiment takes the three-dimensional data of the target dental jaw and the first three-dimensional data as mesh data as an example for explanation, which means the voxel data are processed through meshing. During the meshing process, preprocessing such as smoothing can also be performed to enhance the accuracy of the mesh data.

Exemplarily, referring to FIG. 2, FIG. 2 is a schematic diagram of a tooth model provided by the embodiment of the present application. The CBCT data 210 shown in FIG. 2 includes multiple CBCT images. After performing instance segmentation based on the CBCT data 210, the first three-dimensional data 220 of the individual teeth are reconstructed. After reconstructing the first three-dimensional data 220, a meshed tooth model composed of the first three-dimensional data of individual teeth can also be displayed. When displaying, different fill colors can be set for different individual teeth to provide a more intuitive understanding of tooth information.

S130: registering the reconstructed three-dimensional data and scanned three-dimensional data which is acquired by means of an intraoral scanner scanning the target dental jaw.

It can be understood that, based on the above S120, the scanned three-dimensional data generated after the intraoral scanner scans the target dental jaw are obtained, and the reconstructed three-dimensional data and the scanned three-dimensional data are registered. The three-dimensional data scanned by the intraoral scanner can be scanned mesh data. The scanned data obtained by the intraoral scanner can be the overall three-dimensional data of the target dental jaw. Specifically, the individual teeth can be categorized according to the category of the individual teeth, and the upper and lower dental jaws can be registered separately, meaning rough registration is performed in a unit of the dental jaw. For example, the first three-dimensional data of multiple individual teeth forming the lower dental jaw are registered with the mesh data of the lower dental jaw in the scanned three-dimensional data, and the first three-dimensional data of multiple individual teeth forming the upper dental jaw are registered with the mesh data of the upper dental jaw in the scanned three-dimensional data.

S140: merging on the basis of the registered reconstructed three-dimensional data and the registered scanned three-dimensional data, so as to generate a tooth model.

Optionally, the generation of the tooth model can be specifically achieved through the following steps:
merging the tooth root data and interproximal surface data of the first mesh data of the registered individual teeth with the tooth crown data of the second three-dimensional data of the individual teeth segmented from the scanned three-dimensional data to generate the tooth model.

It can be understood that, based on the above S130, the first three-dimensional data of the individual teeth include tooth crown data, interproximal surface data, and tooth root data. However, the surface accuracy of the tooth crown data is relatively low, making it difficult to depict the precise details of the tooth surface based on the tooth crown data. The second three-dimensional data of the individual teeth segmented from the scanned three-dimensional data is obtained, and the second three-dimensional data of the individual teeth includes high-accuracy tooth crown data. Therefore, for the individual teeth of the same object, the interproximal surface data and tooth root data in the registered first three-dimensional data are spliced with the tooth crown data in the second three-dimensional data. This means that after one-to-one correspondence between CBCT data and scanned three-dimensional data, the first three-dimensional data and the second three-dimensional data of the same tooth are spliced and merged. Specifically, the tooth crown data in the second three-dimensional data of the same tooth are spliced and merged with the tooth root data and interproximal surface data in the first three-dimensional data. After splicing, smoothing can be performed to obtain a complete, high-accuracy tooth model. The obtained tooth model includes the upper dental jaw model and the lower dental jaw model. Each dental jaw model consists of multiple individual tooth models, which specifically include information such as the relative positions of the individual tooth models. The tooth model can also be merged with gum information and gingival information. Other information that the tooth model can include is not detailed herein.

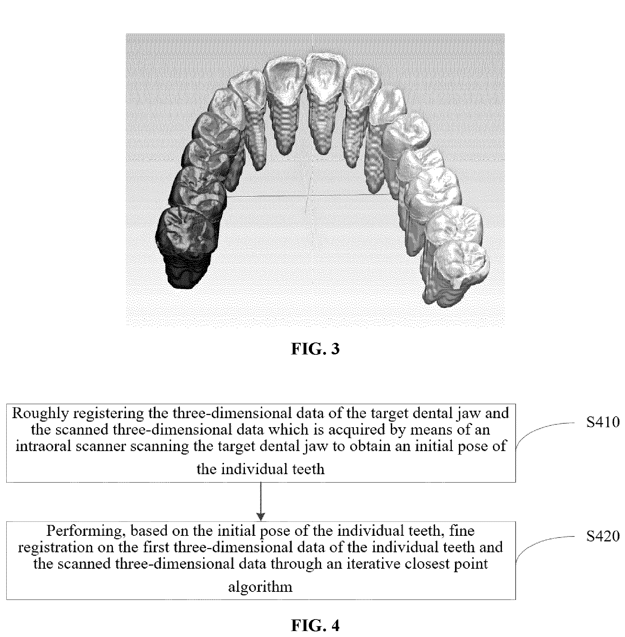

Exemplarily, referring to FIG. 3, FIG. 3 is a schematic diagram of a merged tooth model provided by the embodiment of the present application. The tooth model has relatively high accuracy, including complete three-dimensional information of individual teeth. It provides users with detailed high-accuracy tooth crown information, gingival surface information, interproximal surface information, and tooth root information. The tooth crown information describes the precise details of the tooth surface, the tooth root information records the information of unexposed wisdom teeth and collision between tooth roots in detail, and the interproximal surface information ensures better merging of the tooth roots and tooth crowns.

The tooth model generation method provided by the embodiments of the present application adopts deep learning technology to automatically perform instance segmentation on the CBCT data to obtain the voxel data of individual teeth. Subsequently, through mesh reconstruction technology, the reconstructed three-dimensional data are automatically built based on the voxel data of individual teeth. The reconstructed three-dimensional data include the three-dimensional data of the target dental jaw and the first three-dimensional data of the individual teeth forming the target dental jaw. The intraoral scanning data from the digital intraoral scanner and the reconstructed three-dimensional data are registered. Finally, for each single tooth, the interproximal surface data and tooth root data in the first three-dimensional data of the reconstructed three-dimensional data on the basis of registration are merged with the tooth crown data in the second three-dimensional data segmented from the intraoral scanning data to generate a complete, high-accuracy tooth model. In the method provided by the present application, the high-accuracy tooth crown data in the intraoral scanning data are merged with the interproximal surface information and tooth root information in the CBCT data. That is, the CBCT data is automatically merged with the tooth mesh data output by the digital intraoral scanner. On the basis of retaining high-quality tooth crown data, tooth root data and interproximal surface data are added, which provides guidance for virtual implant positioning, maxillofacial surgery simulation, and orthodontic treatment, and also solves the problem that CBCT data cannot depict detailed information of the tooth crown due to the presence of metal artifacts. At the same time, it also solves the problem of loss of interproximal surface information and the inability to obtain tooth root information in the intraoral scanning data. It can further detect collisions between unexposed wisdom teeth and tooth roots during the orthodontic process. The entire tooth model generation process is executed automatically without manual interaction. At the same time, the accuracy of the tooth model is relatively high, which reduces the time consumption to a certain extent.

Referring to FIG. 4 based on the above embodiments, FIG. 4 is a schematic flow diagram of a tooth model generation method provided by the embodiment of the present application. Optionally, the step of registering the reconstructed three-dimensional data and scanned three-dimensional data which is acquired by means of an intraoral scanner scanning the target dental jaw specifically includes steps S410 to S420 as shown in FIG. 4.

S410: performing coarse registration on the three-dimensional data of the target dental jaw and scanned three-dimensional data which is acquired by means of an intraoral scanner scanning the target dental jaw to obtain an initial pose of the individual teeth.

It can be understood that the three-dimensional data of the target dental jaw and scanned three-dimensional data which is acquired by means of the intraoral scanner scanning the target dental jaw are roughly registered to obtain an initial pose of the individual teeth.

Optionally, the initial pose of the individual teeth can be achieved through the following steps:
using a feature stitching algorithm to roughly register the three-dimensional data of the target dental jaw and scanned three-dimensional data which is acquired by means of an intraoral scanner scanning the target dental jaw to obtain an initial pose of the individual teeth; and
obtaining the initial pose of the individual teeth based on the initial pose of the dental jaw.

It can be understood that the obtained reconstructed three-dimensional data include the three-dimensional data of the target dental jaw (dental jaw mesh data) and the first three-dimensional data of the individual teeth forming the target dental jaw (mesh data of the individual teeth). Specifically, based on the type (numbering) of the individual teeth, it can be determined whether the first three-dimensional data of the tooth is in the mesh data of the upper dental jaw or the mesh data of the lower dental jaw. The mesh data of the upper dental jaw and the mesh data of the lower dental jaw can be processed separately, and the processing order is not restricted. Multiple processes can also be constructed for simultaneous processing. The dental jaw mesh data and the scanned three-dimensional data which is acquired by means of the intraoral scanner scanning the target dental jaw are roughly registered, meaning that global registration is performed with the dental jaw as a whole. The initial pose of the dental jaw is obtained. The intraoral-scanned mesh data has a corresponding coordinate system, and the first three-dimensional data also have a corresponding coordinate system. First, the two sets of mesh data are unified into the same coordinate system. Taking the lower dental jaw as an example, the mesh data of the lower dental jaw corresponding to the CBCT are rotated and translated to the mesh data of the lower dental jaw in the intraoral-scanned mesh data. That is, after rough registration, the initial pose of the three-dimensional data of the lower dental jaw reconstructed from CBCT is obtained relative to the three-dimensional data reconstructed from the intraoral scanner. Finally, based on the initial pose of the dental jaw, the initial pose of the individual teeth is obtained. For the individual teeth, the initial pose of the CBCT-reconstructed mesh data of the individual teeth relative to the mesh data reconstructed by the intraoral scanner is the same as the initial pose of the lower dental jaw. The initial pose of the individual teeth is also the initial pose between the three-dimensional data of the individual teeth obtained via CBCT and the three-dimensional data of the individual teeth obtained via the intraoral scanner.

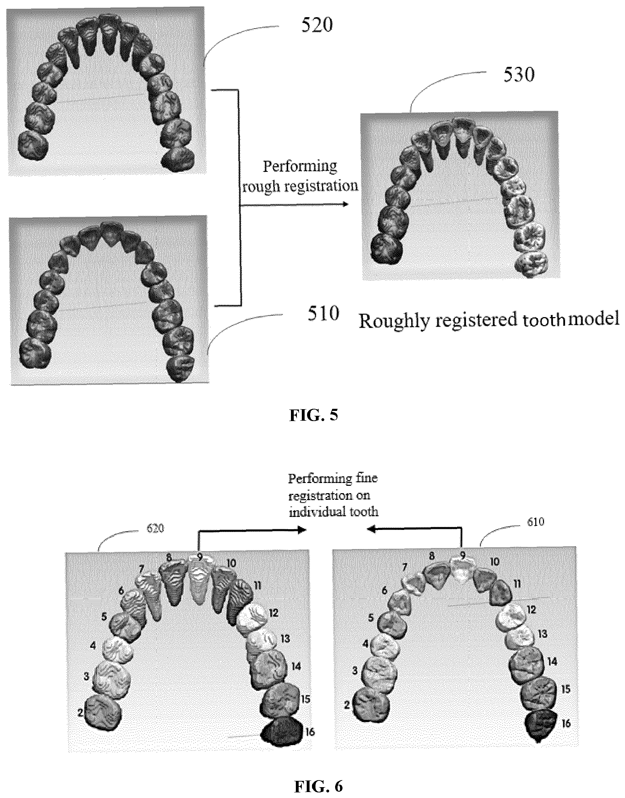

Exemplarily, referring to FIG. 5, FIG. 5 is a schematic diagram of a roughly registered tooth model provided by the embodiment of the present application. FIG. 5 includes intraoral-scanned mesh data 510, dental jaw mesh data 520, and roughly registered tooth model 530. After performing rough registration between the intraoral-scanned mesh data 510 and the dental jaw mesh data 520, the roughly registered tooth model 530 can be displayed to intuitively understand the registration status. During display, the gingiva can also be shown.

S420: performing, based on the initial pose of the individual teeth, fine registration on the first three-dimensional data of the individual teeth and the scanned three-dimensional data through an iterative closed point algorithm.

It is understandable that, based on the aforementioned S410 and the initial pose of the individual teeth, the iterative closed point (ICP) algorithm is used to perform local optimization with individual teeth as the processing unit. The fine registration is performed between the first three-dimensional data of the individual teeth reconstructed by segmenting the CBCT data and the second three-dimensional data of the individual teeth segmented from the mesh data scanned by the intraoral scanner. If the three-dimensional data is mesh data, point data in the mesh data is extracted, and ICP algorithm registration is performed based on the point data. If the three-dimensional data is point data, the ICP algorithm is directly used for registration.

Optionally, the fine registration process is as follows:
performing instance segmentation on the scanned three-dimensional data to obtain the second three-dimensional data of the individual teeth forming the target dental jaw; and
performing, based on the initial pose of the individual teeth, fine registration on the first three-dimensional data of the individual teeth and the second three-dimensional data of the individual teeth through an iterative closed point algorithm.

It is understandable that instance segmentation is performed on the scanned three-dimensional data to obtain the second three-dimensional data of the individual teeth, and the second three-dimensional data includes tooth crown data with high precision. The instance segmentation method can be a deep learning method, with no specific limitation on the method. For the individual teeth, its initial pose is the initial pose of the CBCT-reconstructed mesh data of the individual teeth relative to the mesh data reconstructed by the intraoral scanner and is also the initial pose of the CBCT-reconstructed mesh data of the individual teeth relative to the overall mesh data reconstructed by the intraoral scanner. The first three-dimensional data and the second three-dimensional data are finely registered through an iterative closed point algorithm, thus achieving local optimization with individual teeth as a processing unit to improve the accuracy of the registration. It is understandable that the scanned three-dimensional data can include gingival data. During the instance segmentation of the scanned three-dimensional data, the gingival data is segmented separately. In the process of fine registration, the mesh data of the tooth crown in the first three-dimensional data is finely registered with the mesh data of the tooth crown in the second three-dimensional data based on the initial pose of the individual teeth. This facilitates the subsequent merging of mesh data.

Optionally, the three-dimensional data of gingiva in the target dental jaw is segmented according to the scanned three-dimensional data. The three-dimensional data of the gingiva is displayed in response to a triggering operation for a display mark.

As an example, referring to FIG. 6, scanned three-dimensional data 610 and first three-dimensional data 620 are included in FIG. 6. An instance segmentation is performed on the scanned three-dimensional data 610 to obtain the second three-dimensional data and the gingival data of the individual teeth. During the fine registration, only the second three-dimensional data is used, excluding the gingival data. The first three-dimensional data and the second three-dimensional data include the mesh data of the individual teeth with the same numbering, for example, tooth No. 3 has corresponding second three-dimensional data and first three-dimensional data. Subsequently, local fine registration is performed using the ICP algorithm for the second three-dimensional data and first three-dimensional data corresponding to the individual teeth with the same numbering. After fine registration, the meshed tooth model composed of the registered second three-dimensional data and first three-dimensional data can be displayed. A display mark of the gingiva can also be set on the display interface. The display mark of the gingiva is used to respond to a triggering operation of the display mark based on displaying the meshed tooth model, thus displaying the gingival data segmented based on the scanned three-dimensional data. This provides a more intuitive understanding of the results of fine registration. Different teeth can be displayed with distinct fill colors for easier differentiation.

The embodiment of the present application provides a tooth model generation method. The dental jaw mesh data of the reconstructed three-dimensional data is roughly registered with the dental jaw mesh data of the intraoral-scanned mesh data, that is, the mesh data is globally registered using the dental jaw as the registration unit. The initial pose of the dental jaw in the CBCT data is determined. Subsequently, based on the initial pose of the dental jaw, the initial pose of the individual teeth in the CBCT data is determined, and based on the initial pose of the individual teeth in the CBCT data, local registration is performed on the first three-dimensional data and the second three-dimensional data, where the individual teeth are used as the registration unit. This can simultaneously achieve automatic registration and improve the accuracy of registration, facilitating the subsequent merging of CBCT data and intraoral scanning data to obtain complete and high-precision dental data.

The embodiment of the present application provides a tooth model generation method, wherein an instance segmentation is performed on the CBCT data of the target dental jaw obtained through CBCT, and the independent three-dimensional data of each tooth and the overall three-dimensional data of the dental jaw are reconstructed. Preferably, the overall three-dimensional data of the dental jaw is composed of the independent three-dimensional data of each tooth. Based on the surface data of the target dental jaw acquired by the intraoral scanner, the overall three-dimensional data of the dental jaw and the independent three-dimensional data of each tooth are reconstructed. Preferably, the independent three-dimensional data of each tooth acquired by the intraoral scanner is formed by segmenting the overall three-dimensional data of the dental jaw acquired by the intraoral scanner. The overall three-dimensional data of the target dental jaw acquired based on the CBCT is roughly registered with the overall three-dimensional data of the target dental jaw acquired based on the intraoral scanner. That is, the overall three-dimensional data of the target dental jaw is used as the registration unit to perform global registration of the two overall three-dimensional data. Furthermore, the initial relative pose between the two overall three-dimensional data (hereinafter referred to as the initial pose of the target dental jaw) is determined. Then, based on the initial pose of the target dental jaw, the initial pose of the individual teeth in the target dental jaw is determined (that is, for the individual teeth, the initial relative pose between the independent three-dimensional data of the individual teeth acquired based on the CBCT and the independent three-dimensional data of the individual teeth acquired based on the intraoral three-dimensional scanner). Based on the initial pose of the individual teeth, two independent three-dimensional data of the individual teeth are finely registered. That is, local registration is performed on the first three-dimensional data and the second three-dimensional data, where the individual teeth are used as the registration unit. This can simultaneously achieve automatic registration and improve the accuracy of registration, facilitating the subsequent merging of CBCT data and intraoral scanning data to obtain complete and high-precision dental data.

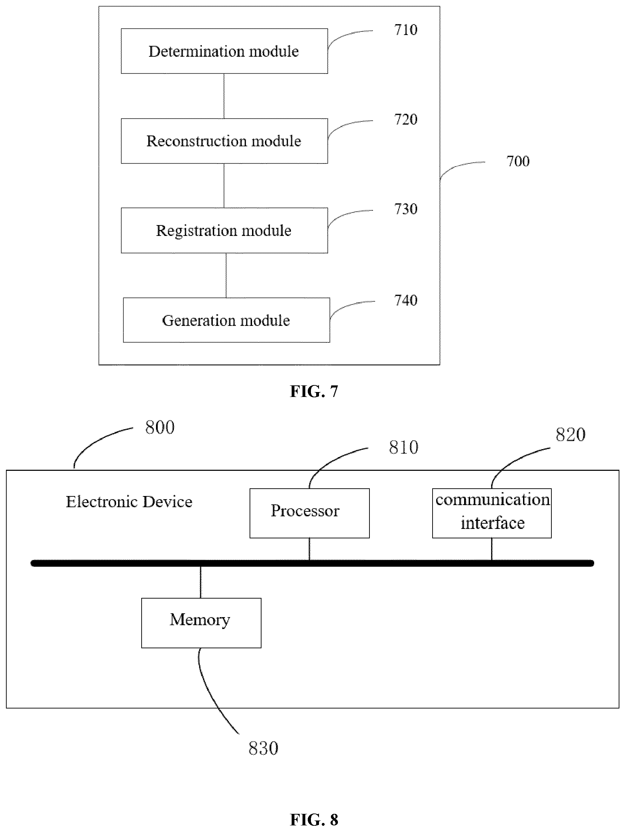

FIG. 7 is a schematic structural diagram of a tooth model generation apparatus provided by the embodiment of the present application. The tooth model generation apparatus provided in the embodiment of the present application can execute the processing flow provided in the above-mentioned embodiments of the tooth model generation method. As shown in FIG. 7, the tooth model generation apparatus 700 includes a determination module 710, a reconstruction module 720, a registration module 730, and a generation module 740, wherein
the determination module 710 is configured for performing instance segmentation on acquired CBCT data of a target dental jaw, so as to determine voxel data of individual teeth forming the target dental jaw;
the reconstruction module 720 is configured for performing reconstruction according to the voxel data of the individual teeth in the target dental jaw, so as to obtain reconstructed three-dimensional data;
the registration module 730 is configured for registering the reconstructed three-dimensional data and scanned three-dimensional data which is acquired by means of an intraoral scanner scanning the target dental jaw; and
the generation module 740 is configured for merging on the basis of the registered reconstructed three-dimensional data and the registered scanned three-dimensional data, so as to generate a tooth model.

Optionally, the reconstructed three-dimensional data include the three-dimensional data of the target dental jaw and first three-dimensional data of the individual teeth forming the target dental jaw.

Optionally, the registration module 730 is specifically configured for:
performing coarse registration on the three-dimensional data of the target dental jaw and scanned three-dimensional data which is acquired by means of an intraoral scanner scanning the target dental jaw to obtain an initial pose of the individual teeth;
performing, based on the initial pose of the individual teeth, fine registration on the first three-dimensional data of the individual teeth and the scanned three-dimensional data.

Optionally, the registration module 730 is specifically configured for:
performing coarse registration, based on a feature stitching algorithm, on the three-dimensional data of the target dental jaw and scanned three-dimensional data which is acquired by means of an intraoral scanner scanning the target dental jaw to obtain an initial pose of the individual teeth; and
obtaining the initial pose of the individual teeth based on the initial pose of the target dental jaw.

Optionally, the registration module 730 is specifically configured for:
performing instance segmentation on the scanned three-dimensional data to obtain the second three-dimensional data of the individual teeth forming the target dental jaw; and
performing, based on the initial pose of the individual teeth, fine registration on the first three-dimensional data of the individual teeth and the second three-dimensional data of the individual teeth through the iterative closed point algorithm.

Optionally, the generation module 740 is specifically configured for:
merging the tooth root data and interproximal surface data of the registered first three-dimensional data of the individual teeth with the tooth crown data of the second three-dimensional data of the individual teeth segmented from the scanned three-dimensional data to generate the tooth model.

Optionally, the apparatus 700 is further configured for:
obtaining three-dimensional data of gingiva in the target dental jaw by segmenting the scanned three-dimensional data; and
displaying the three-dimensional data of the gingiva in response to a triggering operation for a display mark.

Optionally, the CBCT data includes multiple CBCT images, and each image of the multiple CBCT images includes information about at least one tooth forming the target dental jaw.

Optionally, the determination module 710 is specifically configured for:
classifying the multiple CBCT images using a pre-trained deep learning model, determining the category of the individual teeth included in each CBCT image of the multiple CBCT images, and segmenting based on the category of the individual teeth to obtain the segmentation data of the individual teeth; and
obtaining the voxel data of the individual teeth forming the target dental jaw according to the segmentation data corresponding to the individual teeth of the same category in the multiple CBCT images.

The tooth model generation apparatus of the embodiment, shown in FIG. 7, can be used to execute the technical solution of the above method embodiment. Its implementation principle and technical effect are similar and will not be described in detail herein.

FIG. 8 is a schematic structural diagram of an electronic device provided by the embodiment of the present application. An electronic device provided in the embodiment of the present application can execute the processing flow provided in the above embodiment. As shown in FIG. 8, the electronic device 800 includes: a processor 810, a communication interface 820, and a memory 830, wherein the computer program is stored in the memory 830 and configured to be executed by the processor 810 to execute the aforementioned tooth model generation method.

Further, the embodiment of the present application provides a computer-readable storage medium, wherein the storage medium stores a computer program. When executed by the processor, the computer program implements the tooth model generation method described in the above embodiment.

In addition, the embodiment of the present application further provides a computer program product, wherein the computer program product includes a computer program or instructions. When the computer program or instructions are executed by a processor, the tooth model generation method described above is implemented.

It should be noted that, in the context, relationship terms such as first and second are used only to distinguish one entity or operation from another entity or operation, without necessarily requiring or implying any such actual relationship or order between those entities or operations. Furthermore, the terms "comprise", "include", or any other variations are intended to encompass non-exclusive inclusion. This allows a process, method, item, or device that includes a series of elements to not only include those elements but also include other elements that are not explicitly listed, or elements that are inherent to the process, method, item, or device. In the absence of further limitations, the inclusion of an element specified by the phrase "comprising a..." does not exclude the presence of additional identical elements in the process, method, article, or apparatus that includes the specified element.

The above are only specific embodiments of the present application so that those skilled in the art can understand or implement the present application. Various modifications to these embodiments will be apparent to those skilled in the art. The general principles defined herein may be implemented in other embodiments without departing from the spirit or scope of the present application. Accordingly, the present application shall not be limited to the embodiments shown herein but shall be accorded the broadest scope consistent with the principles and novel features disclosed herein.

### Industrial Practicality

The tooth model generation method provided by the present application can effectively marge CBCT data and tooth mesh data scanned by a digital intraoral scanner. On the basis of retaining high-quality tooth crown data, tooth root data and interproximal surface data are added to generate a tooth model with higher precision. It can play a good guiding role in tooth diagnosis and treatment and has strong industrial practicality.

## Claims

1. A tooth model generation method, **characterized in that** the method comprises:
performing instance segmentation on acquired CBCT data of a target dental jaw, so as to determine voxel data of individual teeth forming the target dental jaw;
performing reconstruction according to the voxel data of the individual teeth in the target dental jaw, so as to obtain reconstructed three-dimensional data;
registering the reconstructed three-dimensional data and scanned three-dimensional data which is acquired by an intraoral scanner scanning the target dental jaw; and
merging based on the registered reconstructed three-dimensional data and the registered scanned three-dimensional data, so as to generate a tooth model.

2. The method according to claim 1, wherein the reconstructed three-dimensional data comprises three-dimensional data of the target dental jaw and first three-dimensional data of the individual teeth forming the target dental jaw; and the step of registering the reconstructed three-dimensional data and scanned three-dimensional data which is acquired by an intraoral scanner scanning the target dental jaw comprises:
performing coarse registration on the three-dimensional data of the target dental jaw and the scanned three-dimensional data which is acquired by the intraoral scanner scanning the target dental jaw to obtain an initial pose of the individual teeth; and
performing, based on the initial pose of the individual teeth, fine registration on the first three-dimensional data of the individual teeth and the scanned three-dimensional data.

3. The method according to claim 2, wherein the step of performing coarse registration on the three-dimensional data of the target dental jaw and the scanned three-dimensional data which is acquired by the intraoral scanner scanning the target dental jaw to obtain an initial pose of the individual teeth comprises:
performing coarse registration, based on a feature stitching algorithm, on the three-dimensional data of the target dental jaw and the scanned three-dimensional data which is acquired by the intraoral scanner scanning the target dental jaw to obtain an initial pose of the target dental jaw; and
obtaining the initial pose of the individual teeth based on the initial pose of the target dental jaw.

4. The method according to claim 2, wherein the step of performing, based on the initial pose of the individual teeth, fine registration on the first three-dimensional data of the individual teeth and the scanned three-dimensional data comprises:
performing instance segmentation on the scanned three-dimensional data to obtain second three-dimensional data of the individual teeth forming the target dental jaw; and
performing, based on the initial pose of the individual teeth, fine registration on the first three-dimensional data of the individual teeth and the second three-dimensional data of the individual teeth through an iterative closed point algorithm.

5. The method according to claim 2, wherein the step of merging based on the registered reconstructed three-dimensional data and the registered scanned three-dimensional data, so as to generate a tooth model comprises:
merging tooth root data and interproximal surface data of the registered first three-dimensional data of the individual teeth with tooth crown data of the second three-dimensional data of the individual teeth segmented from the scanned three-dimensional data to generate the tooth model.

6. The method according to claim 1, wherein the method further comprises:
obtaining three-dimensional data of gingiva in the target dental jaw by segmenting the scanned three-dimensional data; and
displaying the three-dimensional data of the gingiva in response to a triggering operation for a display mark.

7. The method according to claim 1, wherein the CBCT data comprises multiple CBCT images, and each image of the multiple CBCT images comprises information about at least one tooth forming the target dental jaw; and
the step of performing instance segmentation on acquired CBCT data of a target dental jaw, so as to determine voxel data of individual teeth forming the target dental jaw comprises:
classifying the multiple CBCT images using a pre-trained deep learning model, determining a category of the individual teeth comprised in each CBCT image of the multiple CBCT images, and segmenting based on the category of the individual teeth to obtain segmentation data of the individual teeth; and
obtaining the voxel data of the individual teeth forming the target dental jaw according to the segmentation data corresponding to the individual teeth of a same category in the multiple CBCT images.

8. A tooth model generation apparatus, **characterized in that** the apparatus comprises:
a determination module, configured for performing instance segmentation on acquired CBCT data of a target dental jaw, so as to determine voxel data of individual teeth forming the target dental jaw;
a reconstruction module, configured for performing reconstruction according to the voxel data of the individual teeth in the target dental jaw, so as to obtain reconstructed three-dimensional data;
a registration module, configured for registering the reconstructed three-dimensional data and scanned three-dimensional data which is acquired by an intraoral scanner scanning the target dental jaw; and
a generation module, configured for merging based on the registered reconstructed three-dimensional data and the registered scanned three-dimensional data, so as to generate a tooth model.

9. An electronic device, **characterized by** comprising:
a memory;
a processor; and
a computer program, wherein
the computer program is stored in the memory and configured to be executed by the processor to implement the tooth model generation method according to any one of claims 1 to 7.

10. A computer-readable storage medium, **characterized in that** the computer-readable storage medium is stored with a computer program, wherein the computer program, when executed by a processor, implements the steps of the tooth model generation method according to any one of claims 1 to 7.
